Europäisches Patentamt

European Patent Office

Office européen des brevets

(11) Publication number: **0 482 461 A1**

# EUROPEAN PATENT APPLICATION

(21) Application number: **91117464.7**

(22) Date of filing: **14.10.91**

(51) Int. Cl.5: **G02B 6/12**, G02F 1/225,
G02F 1/295, G02B 6/34

(30) Priority: **22.10.90 FI 905193**

(43) Date of publication of application:
**29.04.92 Bulletin 92/18**

(84) Designated Contracting States:
**DE ES FR GB NL SE**

(71) Applicant: **OY NOKIA AB**
**Etelaesplanadi 12**
**SF-00130 Helsinki(FI)**

(72) Inventor: **Tervonen, Ari**
**Kotikyläntie 7 C 49**
**SF-02770 Espoo(FI)**

(74) Representative: **Howden, Christopher Andrew**
**et al**
**FORRESTER & BOEHMERT**
**Franz-Joseph-Strasse 38**
**W-8000 München 40(DE)**

(54) **Mach-Zehnder interferometer for multi/demultiplexing.**

(57) The invention relates to a Mach-Zehnder interferometer comprising a symmetrical optical y-junction (5) for dividing an input optical channel (1) into two single-mode optical channel arms (2a, 2b) and another symmetrical optical y-junction (6) for combining the optical channel arms (2a, 2b) into a multimode optical channel (3) which is divided by an asymmetrical optical y-junction (7) into two single-mode output optical channels (4a, 4b). The wave modes of light propagated through the optical channel arms (2a, 2b) are, when combined to said multimode optical channel (3), substantially equal in phase at one selected wavelength or polarization of the light and substantially reverse in phase at another selected wavelength or polarization of the light. In this way the interferometer can be used for separating or combining wavelengths or polarizations, i.e. multiplexing or demultiplexing.

FIG. 1

The invention relates to a Mach-Zehnder interferometer comprising a symmetrical optical y-junction means for dividing an input optical channel into two separate single-mode optical channels; and a symmetrical optical y-junction means for combining said two single-mode optical channels into a multi-mode optical channel.

"Silica-Based Single-Mode Waveguides on Silicon and their Application to Guided-Wave Optical Interferometers", by Norio Takato et al., *Journal of Lightwave Technology,* Vol. 6, No. 6, June 1988, p. 1003-1009, describes various symmetrical and asymmetrical Mach-Zehnder interferometers realized by directional couplers. The symmetrical interferometer discussed in the article has two directional couplers linked by two waveguide arms of equal length. Incoming light is divided by the first directional coupler into two beams between the arms, and the beams are recombined by the second directional coupler. Coupling of the light to either one of the two output arms in the second directional coupler depends on whether the light beams from the two arms to be combined in the second directional coupler interfere in phase or out of phase with each other. One linking arm of the interferometer according to the article comprises an adjustable phase shifter for adjusting the phase difference between the two arms so as to vary the output arm to which the light is to be coupled. This type of interferometer can be used as an optical switch or modulator.

In an asymmetrical Mach-Zehnder interferometer, two directional couplers are combined by two waveguide arms of unequal length. In the article referred to above, such an asymmetrical interferometer is used as an FDM multiplexer between two optical signals with a frequency difference in the gigahertz order.

"Optical-Waveguide Hybrid Coupler", by Masayuki Izutsu et al., *Optics Letters,* Vol. 7, No. 11, November 1982, p. 549-551, discloses an integrated optical Mach-Zehnder interferometer, which is effected by combining a conventional symmetrical Mach-Zehnder interferometer with an asymmetrical Y-junction. Light entering the interferometer is divided by a first symmetrical Y-junction into two beams between the two arms, and the beams are then recombined by a second symmetrical Y-junction. The combined light power is almost entirely coupled to either one of the output arms of the asymmetrical Y-junction, depending on whether the light beams to be combined in the second symmetrical Y-junction interfere in the same or reverse phase. The arms of the interferometer are provided with adjustable phase shifters, by means of which it can be determined to which output arm of the asymmetrical Y-junction the light is coupled. Accordingly, this symmetrical interferometer also operates as an optical switch.

The object of the invention is to provide a new Mach-Zehnder interferometer allowing new applications.

This is achieved by means of a Mach-Zehnder interferometer according to the invention, which comprises an asymmetrical optical y-junction means for dividing the multi-mode optical channel into two single-mode output optical channels and in which wave modes of light propagated over said separate single-mode optical channels and to be combined in said multi-mode optical channel are substantially equal in phase at one selected wavelength or polarization of the light and substantially reverse in phase at another selected wavelength or polarization of the light.

The basic idea of the invention is that a combination of a symmetrical and an asymmetrical y-junction is utilized for effecting coupling of the light from two separate optical channels to the output/input arms of the interferometer. The Mach-Zehnder interferometer can be used for separating light wavelengths or polarizations, that is, as a wavelength demultiplexer, if the optical channels connecting the symmetrical junctions of the interferometer are dimensioned so that the wave modes interfere in the same phase at one of the selected wavelengths to be separated and in the reverse phase at the other wavelength, so that they can be separated into different output channels. In other words, the interferometer is symmetrical at one wavelength or polarization and asymmetrical at the other wavelength.

The invention is also concerned with a Mach-Zehnder interferometer comprising an asymmetrical optical y-junction means for combining two single-mode input optical channels into one multi-mode optical channel; a symmetrical optical y-junction means for dividing said multi-mode optical channel into two separate single-mode optical channels; and a symmetrical optical y-junction means for combining said two separate single-mode optical channels into one single-mode output optical channel. According to the invention, different wavelengths or polarizations of light from the single-mode input optical channels are coupled in said multi-mode optical channel to different wave modes having mutually opposite phases, and different wavelengths or polarizations of light propagated through said two separate singe-mode optical channels are equal in phase and thereby coupled to the mode propagating in the single-mode output optical channel. This other Mach-Zehnder interferometer is based on the fact that when the direction of propagation of light is reversed in the interferometer operating as a demultiplexer, the interferometer can be used for combining different wavelengths or polarizations of light into the same optical channel, i.e. it can be used as a wavelength or polarization multiplexer.

The invention will now be described in greater detail with reference to the attached drawings, in which

Figure 1 illustrates a Mach-Zehnder interferometer according to the invention, which can be used both as a multiplexer and a demultiplexer; and

Figure 2 illustrates another Mach-Zehnder interferometer which can be used in both directions either to combine or separate different wavelengths or polarizations of light.

The Mach-Zehnder interferometer according to the invention is primarily intended to be realized by integrated optical waveguide structures. In the Mach-Zehnder interferometer, light is thus first divided by a beam splitter into two portions, which propagate over different paths to another beam splitter, where they interfere with each other. In integrated optics, beam splitters are waveguide structures, and light propagates in separate optical channels between the splitters.

In the following, a few terms used in integrated optics will be explained. An optical channel is a region of a higher refractive index in a dielectrical medium, such as glass, in which light propagates in a predetermined direction parallel to the longitudinal axis of the optical channel. In a plane perpendicular to the longitudinal axis of the optical channel, the structure of the optical channel can be described by the refractive index distribution, which varies only gradually or (in an ideal optical channel) not at all in the direction of the longitudinal axis. In an ideal optical channel, light propagates at a given wavelength and polarization in a restricted discrete number of waveguide modes. The waveguide mode can be described by its intensity distribution in a plane perpendicular to the longitudinal axis of the optical channel and by a propagation coefficient, which represents oscillatory variation in the phase of the waveguide mode in the direction of the longitudinal axis of the optical channel. If the transverse refractive index distribution of the optical channel changes sufficiently slowly in the direction of the longitudinal axis of the optical channel, the propagation of light takes place in wave modes determined by the local refractive index distribution, that is, the optical channel meets the adiabatic requirement.

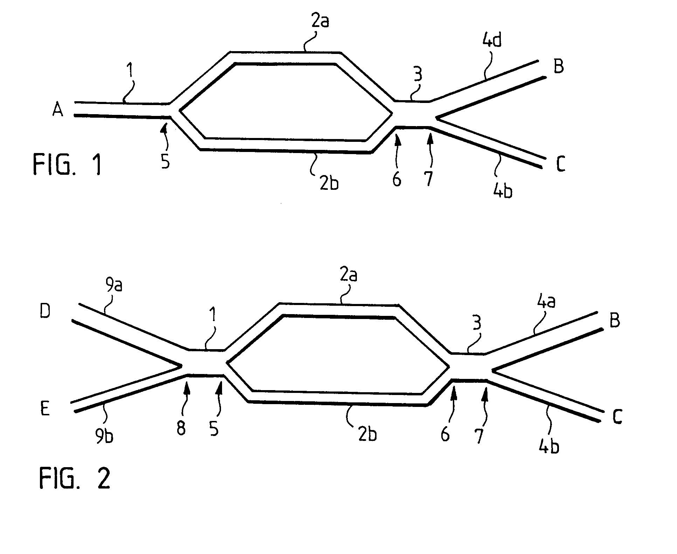

The interferometer according to the invention shown in Figure 1 will first be described as a wavelength or polarization demultiplexer. Light entering the interferometer is applied through an input port A into a single-mode input optical channel 1, in which only an optical basic mode propagates.

The input optical channel 1 is branched by a symmetrical beam splitter or Y-junction 5 into two single-mode optical channels 2a and 2b. The single-mode optical channels 2a and 2b are combined by means of a second symmetrical Y-junction 6 into a double-mode optical channel 3. The double-mode optical channel 3, in turn, is branched by an asymmetrical Y-junction into mutually different single-mode output optical channels 4a and 4b. The channel 4a is broader than the channel 4b. The double-mode optical channel 3 may be arbitrarily short.

As is known, the coupling of light to the output optical channels 4a and 4b depends on the phase difference between the wave modes to be brought together from the optical channels 2a and 2b into the optical channel 3. Even though the channels 4a and 4b are single-mode channels and thus have a single wave mode, they, however, form a double-mode structure over their entire length together with the channel 3. The input of this structure comprises the two different modes of the channel 3 and the outputs of the structure comprise the two separate modes of the channels 4a and 4b. At the transition stage, when the channels 4a and 4b start to diverge from each other, the basic mode of the structure gradually develops towards the mode of higher propagation coefficient recurring in the channels 4a and 4b, while the other mode of the structure gradually develops towards the mode of lower propagation coefficient recurring in the channels 4a and 4b. At any cross-sectional point of the structure, two modes are obtained: the basic mode and the subsequent mode. *Adiabatic* means that light power in the channel remains substantially in single mode. If the wave modes to be brought together from the optical channels 2a and 2b into the optical channel 3 are equal in phase, light (power) is transferred in the optical channel 3 only to the symmetric basic mode. In this case, when the asymmetrical Y-junction 7 is adiabatic, the symmetrical basic mode of the light concentrates in the channel having the higher light propagation coefficient when the output channels 4a and 4b diverge from each other. Correspondingly, if the wave modes combined from the optical channels 2a and 2b into the optical channel 3 are reverse in phase, light transfers in the optical channel 3 only to the second, anti-symmetrical mode. In the asymmetrical, adiabatic Y-junction 7, this anti-symmetrical wave mode concentrates in the output optical channel 4a or 4b having the lower light propagation coefficient. If wave modes combined into the optical channel 3 are not equal or reverse in phase, light transfers in the optical channel 3 both to the symmetrical and to the asymmetrical wave mode and, as a result, to both of the output optical channels 4a and 4b.

In the present invention, the optical channels 2a and 2b are dimensioned so as to differ from each other in such a way that the wave modes combined from these optical channels into the optical channel 3 interfere at one wavelength or polarization of light in the same phase and at another wavelength or polarization in the reverse phase, so that one wavelength or polarization is coupled to the output optical channel 4a and the other wavelength or polarization to the output optical channel 4b. In other words, the interferometer according to the invention separates the wavelengths or polarizations from each other, and so it can be used as a wavelength or polarization demultiplexer. The polarizations to be separated are preferably the TE and TM polarizations recurring in optical channels. In such a case, at least one of the optical channels 2a and 2b has to be sufficiently double-refractive in order to achieve the phase differences necessary for the separation at the different polarizations. When the direction of propagation in the interferometer of Figure 1 is reversed, the operation of the interferometer does not change in any other way. Accordingly, the same component can be used also in the reverse direction to combine wave lengths or polarizations into the same optical channel, whereby the interferometer operates as a wavelength or polarization multiplexer.

When the interferometer of Figure 1 is used in the reverse direction, waves modes of mutually different optical wavelengths or polarizations are applied to ports B and C. Optical basic modes propagating through the single-mode optical channels 4a and 4b are combined by the asymmetrical Y-junction 7 into the same optical channel 3, whereby the wavelengths or polarizations from the two optical channels 4a and 4b are coupled to different wave modes of the optical channel 3. From the optical channel 3 both wave modes are divided by the symmetrical Y-junction 6 into the two single-mode optical channels 2a and 2b, which are then combined by the other symmetrical Y-junction 5 into the single-mode optical channel 1. The wave modes of the different wavelengths or polarizations are reverse in phase in the optical channel 3 and the optical channels 2a and 2b are so dimensioned that the wave modes of both polarizations or wavelengths are equal in phase when combined into the optical channel 1, so that they are both coupled to the basic mode propagating in this channel.

Figure 2 shows another interferometer according to the invention, which is otherwise similar to that shown in Figure 1 except that the input channel 1 is now a double-mode optical channel to which two different single-mode optical channels 9a and 9b are combined by an adiabatic asymmetrical Y-junction 8. The interferometer now has two inputs D and E and two outputs B and C. When light is coupled to the interferometer through one of the inputs D and E, the interferometer operates as a wavelength or polarization separator similarly as in the case of Figure 1. When the input channel D or E is changed, the wavelengths or polarizations to be coupled to the output channels B and C are correspondingly interchanged. When mutually different polarizations or wavelengths are applied to both the input D and the input E, the interferometer combines these with each other in the optical channel 3 so that the same sum signal is coupled to both output optical channels 4a and 4b. The interferometer of Figure 2 operates in the same way even if the direction of propagation of light is reversed and the ports B and C are used as inputs. Accordingly, the interferometer of Figure 2 can be used in both directions for separating or combining wavelengths or polarizations.

The interferometer according to the invention is preferably realized as an integrated optical component on a dielectrical substrate, such as glass, on which the required optical channels and junctions are formed by an ion exchange technique well-known in the art.

The figures and the description related to them are only intended to illustrate the present invention. In its details, the invention may vary within the scope of the accompanying claims.

The features disclosed in the foregoing description, in the following claims and/or in the accompanying drawings may, both separately and in any combination thereof, be material for realising the invention in diverse forms thereof.

## Claims

1. Mach-Zehnder interferometer comprising
   a symmetrical optical y-junction means (5) for dividing an input optical channel (1) into two separate single-mode optical channels (2a, 2b);
   a symmetrical optical y-junction means (6) for combining said two single-mode optical channels (2a, 2b) into a multi-mode optical channel (3); **characterized** in that it comprises an asymmetrical optical y-junction means (7) for dividing said multi-mode optical channel (3) into two single-mode output optical channels (4a, 4b); and in that wave modes of light propagated over said separate single-mode optical channels (2a, 2b) and to be combined in said multi-mode optical channel (3) are substantially equal in phase at one selected wavelength or polarization of the light and substantially reverse in phase at another selected wavelength or polarization of the light.

7      **EP 0 482 461 A1**      8

2. Interferometer according to claim 1, **characterized** in that the input optical channel (1) is a single-mode channel.

3. Interferometer according to claim 1, **characterized** in that the input optical channel (1) is a multi-mode channel, and that the interferometer comprises an asymmetrical optical y-junction means (8) for combining two different single-mode input optical channels (9a, 9b) into said multi-mode input optical channel (1).

4. Interferometer according to any of the preceding claims, **characterized** in that the output optical channels (4a, 4b) of the asymmetrical optical y-junction means (7) are of unequal width, whereby a wavelength or polarization the wave modes of which interfere in the multi-mode optical channel (3) in the same phase is coupled to the broader output optical channel (4a), and another wavelength or polarization the wave modes of which interfere in the multi-mode output channel (3) in the reverse phase is coupled to the narrower output optical channel (4b).

5. Mach-Zehnder interferometer, **characterized** in that it comprises

an asymmetrical optical y-junction means (7) for combining two single-mode input optical channels (4a, 4b) into one multi-mode optical channel (3);

a symmetrical optical y-junction means (6) for dividing said multi-mode optical channel (3) into two separate single-mode optical channels (2a, 2b); and

a symmetrical optical y-junction means (5) for combining said two separate single-mode optical channels (2a, 2b) into one single-mode output optical channel (1); and in that

different wavelengths or polarizations of light from the single-mode input optical channels (4a, 4b) are coupled in said multi-mode optical channel (3) to different wave modes having mutually opposite phases, and that different wavelengths or polarizations of light propagated through said two separate single-mode optical channels (2a, 2b) are equal in phase and thereby coupled to the mode propagating in the single-mode output optical channel.

6. Interferometer according to any of the preceding claims, **characterized** in that it is fabricated by an ion exchange technique on a glass substrate.

7. Interferometer according to any of the preceding claims, **characterized** in that said multi-mode optical channels (1, 3) are double-mode optical channels.

8. Interferometer according to any of the preceding claims, **characterized** in that said different polarizations of light are TE and TM polarizations.

9. Interferometer according to any of the preceding claims, **characterized** in that the direction of propagation of light is reversible.

10. Interferometer according to claim 1 or 5, **characterized** in that the asymmetrical Y-junction (8, 7) is an adiabatic junction.

11. Interferometer according to any of the preceding claims, **characterized** in that at least one of said two separate single-mode optical channels (2a, 2b) is provided with means for adjusting a phase shift induced by the optical channel.

5

FIG. 1

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | PATENT ABSTRACTS OF JAPAN vol. 11, no. 395 (P-650)(2842), 24 December 1987; & JP - A - 62160405 (SUMITOMO ELECTRIC) 16.07.1987 * the whole document * | 1,2,4,6,7, 9,11 | G 02 B 6/12 G 02 F 1/225 G 02 F 1/295 G 02 B 6/34 |
| A | idem | 5 | |
| Y | US-A-4 674 827   (IZUTSU et al.) * column 3, lines 7-42; column 4, line 29 - column 5, line 15; figures 3,5 * | 1,2,4,6,7, 9,11 | |
| A | | 5,10 | |
| A | APPLIED PHYSICS LETTERS vol. 50, no. 24, 16 June 1987, pages 1710-1712, New York, NY, US; E. KAPON et al.: "Multichannel waveguide junctions for guided-wave optics" * page 1710 * | 1,5,7 | |
| A | US-A-4 515 430   (JOHNSON) * figures 2,3; column 4, line 61 - column 5, line 7 * | 1,2,5,7,11 | |
| A | EP-A-0 330 457   (GEC-MARCONI) * figure 5; column 4, lines 11-35 * | 5 | **TECHNICAL FIELDS SEARCHED (Int. Cl.5)** |
| A | PATENT ABSTRACTS OF JAPAN vol. 10, no. 247 (P-490)(2303), 26 August 1986; & JP - A - 61077033 (OKI ELECTRIC) 19.04.1986 * whole document * | 5 | G 02 B 6/00 G 02 F 1/00 |

The present search report has been drawn up for all claims

| Place of search | Date of completion of search | Examiner |
|---|---|---|
| Berlin | 18 December 91 | VON MOERS F |